(19) **Europäisches Patentamt**
**European Patent Office**
**Office européen des brevets**

(11) Veröffentlichungsnummer: **0 394 794 B1**

(12) **EUROPÄISCHE PATENTSCHRIFT**

(45) Veröffentlichungstag der Patentschrift: **20.07.94**

(51) Int. Cl.5: **C08F 10/00**, C08F 2/00, C08F 4/32

(21) Anmeldenummer: **90107147.2**

(22) Anmeldetag: **14.04.90**

(54) **Polyethylen sowie Copolymerisate aus überwiegenden Anteilen von Ethylen.**

(30) Priorität: **20.04.89 DE 3912975**

(43) Veröffentlichungstag der Anmeldung:
**31.10.90 Patentblatt 90/44**

(45) Bekanntmachung des Hinweises auf die
Patenterteilung:
**20.07.94 Patentblatt 94/29**

(84) Benannte Vertragsstaaten:
**AT BE DE ES FR GB IT NL**

(56) Entgegenhaltungen:
**EP-A- 0 121 755      FR-A- 2 018 538
FR-A- 2 119 632      FR-A- 2 335 531
FR-A- 2 369 300      US-A- 3 628 918**

(73) Patentinhaber: **BASF Aktiengesellschaft
Carl-Bosch-Strasse 38
D-67063 Ludwigshafen(DE)**

(72) Erfinder: **Hasenbein, Norbert, Dr.
Neuoettinger Strasse 4
D-6716 Dirmstein(DE)**
Erfinder: **Ball, Wolfgang, Dr.
0 6,9
D-6800 Mannheim 1(DE)**
Erfinder: **Schmidt-Thuemmes, Juergen, Dr.
Mainstrasse 7
D-6708 Neuhofen(DE)**
Erfinder: **Koehler, Gernot, Dr.
Calvinstrasse 7c
D-6520 Worms 1(DE)**

**Beschreibung**

Die Erfindung betrifft Polyethylen sowie Copolymerisate aus überwiegenden Anteilen von Ethylen und untergeordneten Anteilen von mit Ethylen polymerisierbaren Comonomeren, erhältlich durch radikalische Polymerisation der Monomeren bei Drücken von 1500 bis 5000 bar, Temperaturen von 40 bis 250°C mittels eines Initiators, unter praktischem Ausschluß von Sauerstoff in mindestens n = 3 Polymerisationstufen, wobei man in der ersten Stufe die Gesamtmenge oder den überwiegenden Teil der Monomeren mittels eines Teils des benötigten Initiators solange der Polymerisation unterwirft, bis sie praktisch zum Stillstand kommt, danach dem um 20 bis 60°C abgekühlten Gemisch einen weiteren Teil des Initiators und gegebenenfalls der Monomeren zusetzt und diesen Vorgang in den Folgestufen bis zur n-ten Stufe wiederholt, mit der Maßgabe, daß die bis zur (n-1)-ten Stufe verwendeten Initiatoren eine Halbwertstemperatur von 80 bis 160°C aufweisen.

Verfahren zur Herstellung von Ethylenhomo- und -copolymerisaten unter erhöhtem Druck und bei Temperaturen von mehr als 40°C sind bereits in einigen Patentschriften beschrieben. Die Reaktion wird entweder in Rohrreaktoren (DE-B 2 557 653, DE-A 2 558 266, DE-A 3 308 926, FR-B 2 335 531, GB-B 1 010 847), oder in einer Kombination aus einem Reaktor mit Rückvermischung und einem nachgeschalteten Rohrreaktor (DE-A 2 322 553, BE-B 710 392) durchgeführt. Die Dichten der dabei entstehenden Ethylenpolymerisate liegen unterhalb 925 kg/m$^3$. Für viele Anwendungsbereiche ist es jedoch notwendig, Polyethylene mit Dichten von mehr als 925 kg/m$^3$ einzusetzen, da nur diese über die entsprechend guten optischen Eigenschaften verfügen. Ihre Herstellung durch radikalische Polymerisation unter erhöhtem Druck und bei erhöhter Temperatur ist möglich, stößt jedoch auf erhebliche Schwierigkeiten, da die radikalische Polymerisationstechnik hohe Kristallinitäten und Dichten nur bei relativ niedrigen Polymerisationstemperaturen zuläßt (Batzer "Polymere Werkstoffe", Band II - Technologie 2, Georg Thieme Verlag Stuttgart 1984, S. 31), wodurch der Umsatz deutlich absinkt. Dies hat zur Folge, daß bei der Darstellung derartiger Polyethylene meist nur Umsätze von weniger als 25 % erreicht werden (US-A 3 660 370).

In DE-A 2 748 263 ist ein Verfahren zur Herstellung von Polyethylenen im gewünschten Dichtebereich bei Umsätzen von mehr als 25 % beschrieben. Dabei wird ein apparativ außerordentlich aufwendiger Reaktortyp benötigt, bei dem es erforderlich ist, den Reaktorquerschnitt mehrmals deutlich zu verändern, die Reaktionsmasse mit einer Strömungszahl von mindestens 0,307 m$^2$/s durch das Reaktionsrohr zu befördern und den Reaktor in der Weise auszugestalten, daß sich an jede Reaktionszone eine Kühl- und Aufbereitungszone anschließt. Mit diesen apparativen und verfahrenstechnischen Maßnahmen lassen sich Polyethylene im gewünschten Dichtebereich nach diesem Verfahren nur unter sehr hohem Aufwand herstellen.

Der Erfindung lag daher die Aufgabe zugrunde, den geschilderten Nachteilen abzuhelfen und unter apparativ und verfahrenstechnisch vertretbarem Aufwand Ethylenhomo- und -copolymerisate mit Dichten von mehr als 925 kg/m$^3$ und guten optischen Eigenschaften herzustellen.

Demgemäß wurden die eingangs definierten Polymerisate gefunden.

Das zur Herstellung der erfindungsgemäßen Polymerisate eingesetzte Verfahren läßt sich sowohl für die Homopolymerisation, als auch für die Copolymerisation von Ethylen mit anderen Monomeren anwenden, unter der Voraussetzung, daß diese unter Hochdruck mit Ethylen radikalisch copolymerisieren. Dazu zählen u.a. $\alpha$-$\beta$-ethylenisch ungesättigte $C_3$-$C_8$-Carbonsäuren, insbesondere Maleinsäure, Fumarsäure, Itaconsäure, Acrylsäure, Methacrylsäure und Crotonsäure. Geeignete Comonomere sind ferner $\alpha$-$\beta$-ethylenisch ungesättigte $C_4$-$C_{15}$-Carbonsäureester oder -anhydride, wobei Methylmethacrylat, Ethylacrylat, n-Butylacrylat, Methacrylsäureanhydrid, Maleinsäureanhydrid und Itaconsäureanhydrid bevorzugt verwendet werden. Der Comonomerengehalt im erfindungsgemäßen Copolymerisat sollte 40 %, vorzugsweise 20 % nicht übersteigen.

Die Polymerisationsreaktion wird bei Drücken von 500 bis 5000 bar und Temperaturen von 40 bis 250°C durchgeführt. Bevorzugt sind dabei Drücke zwischen 1500 und 3500 bar und Temperaturen von 100 bis 250°C.

Die Polymerisation nach dem erfindungsgemäßen Verfahren wird durch Zugabe von radikalisch zerfallenden Initiatoren gestartet, welche eine Halbwertstemperatur von 80 bis 160°C aufweisen. Unter der Halbwertstemperatur ist diejenige Temperatur zu verstehen, bei der die Hälfte des in Benzol gelösten Initiators innerhalb einer Minute zerfällt. Als Beispiele für solche Initiatoren seien genannt: Di-2-ethylhexyl-peroxydicarbonat, Dicyclohexyl-peroxydicarbonat, Dicetyl-peroxydicarbonat, Cumylperneodecanoat, tert.-Amyl-perpivalat, tert.-Butyl-perneodecanoat, tert.-Butyl-permaleinat und bevorzugt tert.-Butyl-perpivalat sowie tert.-Butyl-perisononanoat. Gegebenenfalls kann die n-te Polymerisationsstufe auch durch einen Initiator mit einer Halbwertszeit von bis zu 250°C ausgelöst werden, beispielsweise durch tert.-Butyl-perbenzoat oder durch Methylisobutylketonperoxid. Die Initiatoren können einzeln oder als Gemisch in Konzentrationen

2

von 0,5 bis 100 ppm/h, bevorzugt von 0,5 bis 50 ppm/h, bezogen auf die Monomermenge, eingesetzt werden. Dabei hat es sich als vorteilhaft erwiesen, die Initiatoren in gelöstem Zustand zu verwenden. Geeignete Lösungsmittel sind beispielsweise aliphatische Kohlenwasserstoffe, insbesondere Octan oder Isododecan.

Die Molmasse der beanspruchten Polymerisate kann wie üblich durch Zugabe von Reglern kontrolliert werden. Als Regler eignen sich u.a. aliphatische Kohlenwasserstoffe, Ketone und Aldehyde, wobei bevorzugt Propionaldehyd eingesetzt wird.

Die Herstellung der Polymerisate erfolgt erfindungsgemäß unter praktischem Ausschluß von Sauerstoff.

Das Verfahren wird dabei in mindestens drei aufeinanderfolgenden Stufen ausgeführt, wobei die Polymerisation in jeder Stufe durch Zugabe der entsprechenden Initiatoren wieder neu gestartet werden muß. Dafür eignen sich u.a. Rohrreaktoren, welche mit einer Reihe von Einlaßstellen für den Initiator, sowie gegebenenfalls für die Zufuhr weiterer Monomermengen versehen sind. Der Rohrreaktor sollte dabei ein Längen-/Durchmesserverhältnis von mindestens 1000, vorzugsweise von mehr als 2000 bei einer Länge von 50 bis 1000 m aufweisen und in gewundener Form angeordnet sein. Die bei der Polymerisation des Ethylens freiwerdende Reaktionswärme wird durch Kühlung der Reaktorwand mit Wasser von außen her abgeführt. Gegebenenfalls kann dem Rohrreaktor auch ein Reaktor mit Rückvermischung, insbesondere ein Rührautoklav, vorgeschaltet werden. In diesem Fall ist es ferner möglich, das aus dem Rührreaktor austretende Gemisch vor Eintritt in den Rohrreaktor mit Hilfe eines Wärmeaustauschers abzukühlen. In der Regel wird aber das Verfahren ohne Wärmeaustauscher durchgeführt. Die bei dem Verfahren eingesetzten Reaktoren enthalten außerdem eine Reihe von Temperaturmeßgeräten im Reaktorinnern, so daß der Temperaturverlauf während der Polymerisation beobachtet werden kann.

In einer bevorzugten Ausführungsform wird das Reaktionsgemisch aus Ethylen und einem Regler zunächst auf einen Druck von mehr als 1500 bar komprimiert, auf über 100°C erhitzt und anschließend zusammen mit einem Teil des Initiators in einen Rohrreaktor eingespeist, wo die Polymerisation nach Zerfall des Initiators rasch anspringt. Die Reaktorkühlung sollte dabei so eingestellt werden, daß Temperaturen von 250°C im Rohrinnern nicht überschritten werden. Längs des Rohrreaktors stellt sich schon nach kurzer Zeit ein vom Polymerisationsumsatz abhängiges Temperaturprofil ein. Das Abklingen der Reaktion zeigt sich dabei durch ein Absinken der Temperatur im Rohrinnern. Bei Erreichen einer um 20 bis 60°C unterhalb des Maximums liegenden Temperatur wird die Polymerisation durch Zugabe von weiteren Initiatormengen erneut gestartet. Dies hat zur Folge, daß die Temperatur zunächst wieder deutlich ansteigt, wobei durch geeignete Kühlmaßnahmen dafür gesorgt werden muß, daß das dabei erreichte Temperaturmaximum nicht mehr als 250°C beträgt. Durch erneutes Einspeisen von weiteren Initiatoren läßt sich dieser Vorgang längs des Reaktionsrohres beliebig oft wiederholen. Dadurch bilden sich im Reaktor eine Reihe von verschiedenen Polymerisationsstufen aus, welche alle durch ein bestimmtes Temperaturmaximum gekennzeichnet sind. Erfindungsgemäß sollte das Verfahren mindestens drei Stufen aufweisen. Gegebenenfalls kann dem Reaktionsgemisch am gleichen Ort, oder auch davon räumlich getrennt, neben dem Initiator entweder noch kaltes, oder bevorzugt vorgewärmtes Ethylen zugesetzt werden. Die mittleren Verweilzeiten des Gemisches liegen im Rohrreaktor zwischen 30 und 300, vorzugsweise zwischen 30 und 120 Sekunden. Nach Austragen des Reaktionsgemisches wird das Polymerisat durch Entspannen von unverbrauchtem Ethylen getrennt und letzteres zweckmäßig in den Reaktor zurückgeführt.

Das beschriebene Verfahren kann in analoger Weise auch in einem Reaktor mit Rückvermischung und einem nachgeschalteten Rohrreaktor durchgeführt werden. In diesem Fall sollte der Temperaturanstieg im Reaktor mit Rückvermischung auf 230°C begrenzt werden. Nach Abklingen der Polymerisation wird das Reaktionsgemisch zusammen mit noch unverbrauchtem Monomeren durch ein Hochdruckrohr, welches gegebenenfalls noch mit einem Wärmeaustauscher verbunden ist, in den Rohrreaktor eingebracht, wo das Verfahren, wie oben beschrieben, weitergeführt wird. Die mittlere Verweilzeit des Gemisches beträgt im Reaktor mit Rückvermischung 10 bis 100, bevorzugt 10 bis 30 Sekunden, im Rohrreaktor 10 bis 200, bevorzugt 10 bis 100 Sekunden.

Die erfindungsgemäßen Polymerisate weisen, wie es erwünscht ist, Dichten von mehr als 925 kg/m$^3$, meistens sogar von mehr als 930 kg/m$^3$ auf. Ihre Schmelzflußindices liegen im Bereich von 0,1 bis 100 g/10 min, vorzugsweise zwischen 0,2 und 10 g/10 min, jeweils gemessen nach DIN 53735. Der Schmelzflußindex entspricht der Menge an Polymerisat, die innerhalb von 10 Minuten aus der, nach DIN 53735 genormten Prüfvorrichtung bei einer Temperatur von 190°C und unter einem Gewicht von 2,16 kg ausgepreßt wird. Folien, welche aus diesen Polymerisaten hergestellt sind, weisen ein gutes Spleißvermögen und hervorragende optische Eigenschaften auf. Dies zeigt sich insbesondere an den relativ geringen Streulichtanteilen (nach DIN 53490) und den erhöhten Glanzwerten (nach DIN 67530). Nach dem erfindungsgemäßen Verfahren ist es möglich, Polymerisate mit Dichten über 925 kg/m$^3$ bei Umsätzen von mehr als 25 % herzustellen. Ein weiterer Vorteil besteht darin, daß man die in der Hochdrucktechnik üblichen Reaktoren

EP 0 394 794 B1

verwenden kann, also daß man beispielsweise nicht auf Reaktoren mit wechselnden Querschnitten angewiesen ist und das Verfahren ohne besonderen technischen Aufwand durchführen kann. Im Gegensatz zu dem Verfahren der DE-A 2 748 263 erhält man auch dann die gewünschten Polymerisate, wenn das Reaktionsgemisch mit deutlich kleineren Strömungszahlen als 0,307 $m^2$/s durch den Reaktor fließt.

Die erfindungsgemäßen Polymerisate eignen sich aufgrund ihrer guten optischen Eigenschaften insbesondere zur Herstellung von Folien, als Überzugsmaterialien und als Photolacke.

Beispiele

Die Beispiele 1 bis 3 sowie die entsprechenden Vergleichsbeispiele A und B wurden in einem rohrförmigen Reaktor mit einer Länge von 420 Metern und einem Längen-/Durchmesserverhältnis von 25000 durchgeführt. Die in den Beispielen 1 bis 3 erhaltenen Polymerisate wiesen gute optische Eigenschaften, speziell niedrige Streulichtanteile und einen hohen Glanz (Tabelle 1) auf. Ihre Dichten lagen über 930 kg/$m^3$.

Die bei den Versuchen jeweils hinzugefügten Initiatormengen sind in ppm/h angegeben und beziehen sich immer auf das eingesetzte Ethylen.

Beispiel 1

2,3 t/h Ethylen wurden zusammen mit 2 l/h Propionaldehyd als Regler in einem Hochdrucknachverdichter auf 2800 bar komprimiert, auf 145°C erwärmt und in den Rohrreaktor eingespeist. Die Polymerisation wurde durch Zugabe von 4,8 ppm/h tert.-Butyl-perpivalat und 3,8 ppm/h tert.-Butyl-perisononanoatausgelöst, welche man an der Einlaßstelle des Rohrreaktors den Monomeren hinzusetzte. Nach dem Abklingen der Reaktion wurde die Polymerisation durch zweimalige Zugabe von jeweils 3,4 ppm/h tert.-Butyl-perpivalat und anschließendes Hinzufügen von 2,2 ppm/h tert.-Butyl-perisononanoat jeweils erneut initiiert, so daß sich insgesamt 4 Temperaturmaxima ausbildeten, welche alle 240°C nicht überschritten. Die mittlere Verweilzeit des Reaktionsgemisches betrug 80 Sekunden, bei einer Strömungszahl von 0,11 $m^2$/s. Der Ethylenumsatz lag bei 25,5 %.

Beispiel 2

2,3 t/h Ethylen wurden unter den gleichen, wie im Beispiel 1 beschriebenen Bedingungen in den Rohrreaktor eingespeist und polymerisiert. Nach dem Abklingen der Reaktion wurde die Polymerisation zunächst durch 14,2 ppm/h tert.-Butyl-perpivalat und anschließend durch 7,6 ppm/h tert.-Butyl-perisononanoat jeweils erneut gestartet, wodurch man insgesamt 3 Temperaturmaxima erhielt, die alle unterhalb 250°C lagen. Die mittlere Verweilzeit betrug 80 Sekunden, bei einer durchschnittlichen Strömungszahl von 0,11 $m^2$/s. Bei der Reaktion wurden 26,5 % des ursprünglich eingesetzten Ethylens umgesetzt.

Beispiel 3

1,15 t/h Ethylen wurden zusammen mit 2 l/h Propionaldehyd als Regler in einem Hochdrucknachverdichter auf 2800 bar komprimiert, auf 145°C erhitzt und in den Rohrreaktor eingespeist. Die Polymerisation wurde durch 1,3 ppm/h tert.-Butyl-perpivalat und 2,5 ppm/h tert.-Butyl-perisononanoat an der Eingangsstelle des Reaktors ausgelöst. Nach Abklingen der Reaktion wurde die Polymerisation durch Zugabe von 2,3 ppm/h tert.-Butyl-perisononanoat und 1,6 ppm/h tert.-Butyl-perpivalat an einer weiteren Stelle im Reaktor erneut initiiert. Das durch die Polymerisationswärme aufgeheizte Gemisch wurde durch die Zuführung von 1,15 t/h Ethylen, welches vorher auf 2800 bar komprimiert und auf 70°C erwärmt worden war, abgekühlt. Anschließend fügte man an zwei weiteren Reaktorstellen nochmals jeweils 3,8 ppm/h tert.-Butyl-perpivalat und 3,0 ppm/h tert.-Butyl-perisononanoat hinzu, so daß sich insgesamt 4 Temperaturmaxima ausbildeten, wobei Temperaturen von 235°C nicht überschritten wurden. Die mittlere Verweilzeit des Gemisches betrug 70 Sekunden, bei einer Strömungszahl von 0,22 $m^2$/s und einem Ethylenumsatz von 26,0 %.

Vergleichsbeispiel A

Es wurde unter den gleichen Bedingungen wie in Beispiel 2 polymerisiert, mit dem einzigen Unterschied, daß man die Polymerisation nur einmal durch Zugabe von 7,0 ppm/h tert.-Butyl-perisononanoat reinitiierte. Der Ethylenumsatz betrug in diesem Fall nur 21,9 %.

4

Vergleichsbeispiel B

Es wurde so polymerisiert wie in Beispiel 1 angegeben, mit der einzigen Abänderung, daß man anstelle von tert.-Butyl-perisononanoat Methylisobutylketonhydroperoxid eingesetzte, welches eine Halbwertstemperatur von 190°C aufwies. Die dabei erhältlichen Produkte besaßen Dichten von weniger als 925 kg/m$^3$.

Vergleichsbeispiele A und B

Die bei diesen Versuchen erhältlichen Polymerisate wiesen im Vergleich zu den Beispielen 1 bis 3 erheblich schlechtere optische Eigenschaften auf (Tabelle 1). Ihr Spleißvermögen war unzureichend.

Tabelle 1

| | Umsatz [%] | Dichte [kg/m³] | Schmelzflußindex* [g/10 min] | Streulicht** [%] | Glanz*** [%] | Spleißvermögen |
|---|---|---|---|---|---|---|
| Beispiel 1 | 25,5 | 932,6 | 3,5 | 14 | 49 | gut |
| " 2 | 26,5 | 930,1 | 3,1 | 15 | 48 | gut |
| " 3 | 26,0 | 932,3 | 3,5 | - | - | gut |
| Vgl." A | 21,9 | 929,9 | 3,1 | 18 | 40 | schlecht |
| " " B | 25,7 | 923,5 | 3,0 | 22 | 33 | schlecht |

* nach DIN 53735, bei 190°C und 2,16 kg

** nach DIN 53490

*** nach DIN 67530, unter einem Winkel von 20°

Die Beispiele 4 bis 6 wurden ebenso wie die Vergleichsbeispiele C bis E in einem Polymerisationssystem durchgeführt, welches aus einem Rührautoklaven mit einem Volumen von 35 l und einem daran angeschlossenen Rohrreaktor mit einer Länge von 200 Metern und einem Längen-/Durchmesserverhältnis von 13300 bestand. Die in den Beispielen 4 bis 6 erhältlichen Polymerisate wiesen gute optische Eigenschaften, speziell niedrige Streulichtanteile und einen hohen Glanz auf (Tabelle 2). Ihre Dichten lagen

über 930 kg/m$^3$.

Die bei den Versuchen hinzugefügten Initiatormengen sind in ppm/h angegeben und beziehen sich immer auf das eingesetzte Ethylen.

Beispiel 4

1,4 t/h Ethylen wurden zusammen mit 1,4 l/h Propionaldehyd als Regler in einem Hochdrucknachverdichter auf 2800 bar komprimiert und mit einer Gaseingangstemperatur von 30 °C in den Rührautoklaven eingespeist. Die Polymerisation wurde durch 10,4 ppm/h tert.-Butyl-perpivalat initiiert und der Inhalt des Autoklaven mit Hilfe eines Rührers mit einer Geschwindigkeit von 1300 Umdrehungen/min durchmischt. Die mittlere Verweilzeit betrug dabei 25 Sekunden. Im Autoklaven lag das Temperaturmaximum bei 211 °C.

Anschließend wurde das Reaktionsgemisch über ein isoliertes Hochdruckrohr in den Rohrreaktor eingespeist und die Polymerisation durch 1,5 ppm/h tert.-Butyl-perisononanoat reinitiiert. Dieser Vorgang wurde an einer weiteren Stelle im Rohrreaktor mit 0,95 ppm/h des gleichen Initiators wiederholt, so daß sich dort insgesamt 2 Temperaturmaxima ausbildeten, die beide unterhalb 230 °C lagen. Die mittlere Verweilzeit betrug 40 Sekunden, der Ethylenumsatz 25,5 %.

Beispiel 5

Analog dem Beispiel 4 wurde zunächst 1,4 t/h Ethylen im Rührautoklaven durch Zugabe von 14,4 ppm/h tert.-Butyl-perpivalat polymerisiert, wobei das Temperaturmaximum bei 220 °C lag.

Danach führte man das Reaktionsgemisch über ein isoliertes Hochdruckrohr in den Rohrreaktor ein und fügte an der Einlaßstelle 1,65 ppm/h tert.-Butyl-perisononanoat hinzu. Nach dem Abklingen der Polymerisation wurde diese durch 1,15 ppm/h tert.-Butyl-perisononanoat erneut gestartet. Dadurch entstanden im Rohrreaktor insgesamt 2 Temperaturmaxima, wobei das erste bei 242 °C und das zweite bei 235 °C lag. Die mittleren Verweilzeiten des Gemisches betrugen 20 Sekunden für den Rührautoklaven und 40 Sekunden für den Rohrreaktor. 26,9 % des ursprünglich eingesetzten Ethylens wurden umsetzt.

Beispiel 6

0,7 t/h Ethylen wurden zusammen mit 1,4 l/h Propionaldehyd als Regler mit Hilfe eines Hochdrucknachverdichters auf 2800 bar komprimiert, auf 30 °C erhitzt und in den Rührautoklaven eingebracht. Die Polymerisation wurde durch 10 ppm/h tert.-Butyl-perpivalat initiiert und der Reaktiorinhalt mit Hilfe eines Rührers mit einer Geschwindigkeit von 1300 Umdrehungen/min durchgemischt. Die mittlere Verweilzeit im Reaktor betrug 50 Sekunden. Die Temperatur im Reaktor lag bei 210 °C.

Der Inhalt des Autoklaven wurde vor dem Eintritt in den Rohrreaktor mit 0,7 t/h Ethylen, welches man vorher auf 2800 bar komprimierte und auf 60 °C erhitzte, vermischt und in den Rohrreaktor eingebracht. An dessen Einlaßstelle wurde die Polymerisation durch 0,9 ppm/h tert.-Butyl-perpivalat und 1,8 ppm/h tert.-Butyl-perisononanoat reinitiiert. Nach dem Abklingen der Reaktion fügte man an zwei weiteren Stellen im Rohrreaktor nochmals jeweils 0,95 bzw. 1,1 ppm/h tert.-Butyl-perisononanoat hinzu, so daß sich insgesamt 3 Temperaturmaxima ausbildeten, welche alle unterhalb von 235 °C lagen. Die mittlere Verweilzeit betrug 45 Sekunden, der Ethylenumsatz 27,2 %.

Vergleichsbeispiel C

Der Versuch wurde unter den gleichen Bedingungen wie in Beispiel 4 durchgeführt, mit der einzigen Abänderung, daß man die Polymerisation im Rohrreaktor nur einmal durch Zugabe von 1,5 ppm/h tert.-Butyl-perisononanoat reinitiierte. Der dabei erreichte Ethylenumsatz lag bei nur mehr 22,5 %.

Vergleichsbeispiel D

Es wurde unter den gleichen Bedingungen gearbeitet wie in Beispiel 6, mit der einzigen Anderung, daß das Ethylen, welches zu dem aus dem Rührautoklaven ausgetragenen Gemisch hinzugefügt worden war, 4 ppm Luft enthielt und im Anschluß daran keine weiteren Initiierungen vorgenommen wurden. Das dabei erhaltene Polymerisat hatte eine Dichte von nur noch 922,5 kg/m$^3$. Der Ethylenumsatz betrug 25,5 %.

Vergleichsbeispiel E

Die Polymerisation wurde unter den gleichen, im Beispiel 5 angegebenen Bedingungen durchgeführt. Die einzige Änderung in der Versuchsdurchführung bestand darin, anstelle von tert.-Butyl-perisononanoat Methylisobutylketonhydroperoxid einzusetzen. In beiden Polymerisationszonen lagen die Temperaturmaxima unterhalb von 270°C. Die dabei erhaltenen Polymerisate wiesen Dichten von weniger als 921,5 kg/m$^3$ auf. Der Ethylenumsatz lag bei 27,8 %.

Vergleichsbeispiele C bis E

Die bei diesen Versuchen erhältlichen Polymerisate verfügten über erheblich schlechtere Eigenschaften (siehe Tabelle 2), im Vergleich zu den, aus den Beispielen 4 bis 6 bekannten Polymerisaten.

Tabelle 2

| Beispiel | Umsatz [%] | Dichte [kg/m³] | Schmelzflußindex* [g/10 min] | Streulicht** [%] | Glanz*** [%] | Spleißvermögen |
|---|---|---|---|---|---|---|
| Beispiel 4 | 25,5 | 933,5 | 2,6 | 13 | 60 | gut |
| " 5 | 26,9 | 930,6 | 2,8 | 15 | 57 | gut |
| " 6 | 27,2 | 931,2 | 3,1 | 15 | 55 | gut |
| Vgl." C | 22,5 | 933,8 | 2,5 | 17 | 51 | schlecht |
| " D | 25,5 | 922,5 | 3,5 | 25 | 48 | schlecht |
| " E | 27,8 | 921,5 | 2,8 | 21 | 43 | schlecht |

* nach DIN 53735, bei 190°C und 2,16 kg
** nach DIN 53490
*** nach DIN 67530, unter einem Winkel von 20°

## Patentansprüche

1. Polyethylen sowie Copolymerisate aus überwiegenden Anteilen von Ethylen und untergeordneten Anteilen von mit Ethylen polymerisierbaren Comonomeren jeweils mit einer Dichte von mehr als 925

kg/m$^3$, erhältlich durch radikalische Polymerisation der Monomeren bei Drücken von 1500 bis 5000 bar, Temperaturen von 40 bis 250°C mittels eines Initiators, unter praktischem Ausschluß von Sauerstoff in mindestens n = 3 Polymerisationsstufen, wobei man in der ersten Stufe die Gesamtmenge oder den überwiegenden Teil der Monomeren mittels eines Teils des benötigten Initiators solange der Polymerisation unterwirft, bis sie praktisch zum Stillstand kommt, danach dem um 20 bis 60°C abgekühlten Gemisch einen weiteren Teil des Initiators und gegebenenfalls der Monomeren zusetzt und diesen Vorgang in den Folgestufen bis zur n-ten Stufe wiederholt, mit der Maßgabe, daß die bis zur(n-1)-ten Stufe verwendeten Initiatoren eine Halbwertstemperatur von 80 bis 160°C aufweisen.

2. Polymerisate nach Anspruch 1, erhältlich durch kontinuierliche Polymerisation in einem Rohrreaktor, der mit n Zugabestellen für den Initiator und gewünschtenfalls für die Monomeren versehen ist.

3. Polymerisate nach Anspruch 1, erhältlich durch ein Verfahren, bei dem man die erste Polymerisationsstufe in einem Reaktor mit Rückvermischung bei Temperaturen von 40 bis 230°C und alle weiteren Stufen in einem Rohrreaktor durchführt.

4. Verfahren zur Herstellung von Polymerisaten gemäß den Ansprüchen 1 bis 3 durch radikalische Polymerisation von Ethylen, gewünschtenfalls mit untergeordneten Anteilen von mit Ethylen polymerisierbaren Comonomeren, bei Drücken von 1500 bis 5000 bar, dadurch gekennzeichnet, daß man bei Temperaturen von 40 bis 250°C einen Initiator verwendet, die Reaktion unter praktischem Ausschluß von Sauerstoff in mindestens n = 3 Polymerisationsstufen durchführt, wobei man in der ersten Stufe die Gesamtmenge oder den überwiegenden Teil der Monomeren mittels eines Teils des benötigten Initiators solange der Polymerisation unterwirft, bis sie praktisch zum Stillstand kommt, danach dem um 20 bis 60°C abgekühlten Gemisch einen weiteren Teil des Initiators und gegebenenfalls der Monomeren zusetzt und diesen Vorgang bis zur n-ten Stufe wiederholt, dadurch gekennzeichnet, daß die bis zur (n-1)-ten Stufe verwendeten Initiatoren eine Halbwertstemperatur von 80 bis 160°C aufweisen.

5. Verwendung der Polymerisate gemäß den Ansprüchen 1 bis 3 zur Herstellung von Folien.

6. Verwendung der Polymerisate gemäß den Ansprüchen 1 bis 3 als Überzugsmaterialien.

7. Verwendung der Polymerisate gemäß den Ansprüchen 1 bis 3 als Photolacke.

**Claims**

1. Polyethylene and copolymers of predominant amounts of ethylene and minor amounts of comonomers which are polymerizable with ethylene, each having a density of more than 925 kg/m$^3$, obtainable by free radical polymerization of the monomers under from 1,500 to 5,000 bar and at from 40 to 250°C using an initiator, with virtually complete exclusion of oxygen, in at least n = 3 polymerization stages, wherein, in the first stage, the total amount or the predominant part of the monomers is subjected to polymerization using some of the initiator required, until the polymerization comes virtually to a stop, thereafter a further part of the initiator and, if required, of the monomers are added to the mixture, which has been cooled by 20-60°C, and this process is repeated in the subsequent stages until the n th stage, with the proviso that the initiators used until the (n-1) th stage have a half-life temperature of from 80 to 160°C.

2. A polymer as claimed in claim 1, obtainable by continuous polymerisation in a tube reactor which is provided with n feed points for the initiator and, if desired, for the monomers.

3. A polymer as claimed in claim 1, obtainable by a process in which the first polymerization stage is carried out in a reactor with back-mixing, at from 40 to 230°C, and all further stages are carried out in a tube reactor.

4. A process for the preparation of a polymer as claimed in any of claims 1 to 3 by free radical polymerization of ethylene, if desired with minor amounts of comonomers which are polymerizable with ethylene, under from 1,500 to 5,000 bar, in which an initiator is used at from 40 to 250°C and the reaction is carried out with virtually complete exclusion of oxygen in not less than n = 3 polymerization stages, in the first stage the total amount or the predominant part of the monomers being subjected to

EP 0 394 794 B1

polymerization using some of the initiator required, until said polymerization comes virtually to a stop, thereafter a further part of the initiator and, if required, of the monomers being added to the mixture, which has been cooled by 20-60°C, this process being repeated until the n th stage, wherein the initiators used until the (n-1) th stage have a half-life temperature of from 80 to 160°C.

5. Use of a polymer as claimed in any of claims 1 to 3 for the production of films.

6. Use of a polymer as claimed in any of claims 1 to 3 as a coating material.

7. Use of a polymer as claimed in any of claims 1 to 3 as a photoresist.

**Revendications**

1. Polyéthylène ainsi que copolymères de quantités prédominantes d'éthylène et de moindres quantités de comonomères polymérisables avec l'éthylène, ayant dans chaque cas une masse volumique de plus de 925 kg/m$^3$, que l'on peut obtenir par polymérisation radicalaire des mononères à des pressions de 1500 à 5000 bar, des températures de 40 à 250°C à l'aide d'un amorceur, en l'absence pratiquement d'oxygène, dans au moins n = 3 étapes de polymérisation, où an soumet dans la première étape la quantité totale ou une partie prépondérante des manomères à une polymérisation à l'aide d'une partie de l'amorceur nécessaire jusqu'à ce que cette polymérisation soit pratiquement arrêtée, puis on ajoute au mélange refroidi jusqu'à 20-60°C une autre partie de l'amorceur et éventuellement des monomères et on répète ce processus dans les étapes suivantes jusqu'à la n$^{ième}$ étape, avec la condition que les amorceurs utilisés jusqu'à la (n-1)$^{ième}$ étape présentent une température de demi-réaction de 80 à 160°C.

2. Polymères selon la revendication 1, que l'on peut obtenir par polymérisation continue dans un réacteur tubulaire qui est muni de n points d'entrée pour l'amorceur et au choix pour les monomères.

3. Polymères selon la revendication 1, que l'on peut préparer par un procédé dans lequel on effectue la première étape de polymérisation dans un réacteur avec mélange en retour à des températures de 40 a 230°C et les autres étapes dans un réacteur tubulaire.

4. Procédé de préparation de polymères selon l'une quelconque des revendications 1 à 3, par polymérisation radicalaire d'éthylène, au choix avec de moindres quantités de comonomères polymérisables avec l'éthylène, à des pressions de 1500 à 5000 bar, caractérisé en ce qu'on utilise un amorceur à des températures de 40 à 250°C, on effectue la réaction en l'absence pratiquement d'oxygène dans au moins n = 3 étapes de polymérisation, où on soumet dans la première étape la quantité totale ou une partie prépondérante des monomères à une polymérisation à l'aide d'une partie de l'amorceur nécessaire jusqu'à ce que cette polymérisation soit pratiquement arrêtée, puis on ajoute au mélange refroidi jusqu'à 20-60°C une autre partie de l'amorceur et éventuellement des monomères et on répète ce processus dans les étapes suivantes jusqu'à la n$^{ième}$ étape, caractérisé en ce que les amorceurs utilisés jusqu'à la (n-1)$^{ième}$ étape présentent une température de demiréaction de 80 à 160°C.

5. Utilisation des polymères selon l'une quelconque des revendications 1 à 3, pour la préparation de feuilles.

6. Utilisation des polymères selon l'une quelconque des revendications 1 à 3, comme produits d'enduction.

7. Utilisation des polymères selon l'une quelconque des revendications 1 à 3, comme laques photosensi-bles.

11